# FASCICULE DE BREVET EUROPEEN

(11) **EP 2 596 051 B1**
(45) Date de publication et mention de la délivrance du brevet: **11.04.2018**
(21) Numéro de dépôt: 11731325.4
(22) Date de dépôt: 07.07.2011
(51) Int. Cl.: C08H 1/00, C08K 5/00, C08L 67/00, C08L 89/00, C08J 3/12

(54) **GRANULE THERMOPLASTIQUE A BASE DE CASEINE ET/OU DE CASEINATE, COMPOSITION ET PROCEDE DE FABRICATION**
THERMOPLASTISCHES CASEIN- UND/ODER CASEINAT-GRANULAT, ZUSAMMENSETZUNG UND HERSTELLUNGSVERFAHREN DAFÜR
CASEIN AND/OR CASEINATE THERMOPLASTIC GRANULE, COMPOSITION, AND METHOD FOR PRODUCING SAME

(30) Priorité: 23.07.2010 FR 1056051
(43) Date de publication de la demande: 29.05.2013
(73) Titulaire: Université Jean-Monnet, 42000 Saint Etienne Cedex 2 (FR); Centre National de la Recherche Scientifique, 75794 Paris Cedex 16 (FR)
(72) Inventeur: PROCHAZKA, Frédéric, 42660 Saint Genest Malifaux (FR); ASSEZAT, Gilles, 42240 Unieux (FR)
(74) Mandataire: Cabinet Plasseraud
(86) Numéro de dépôt international: PCT/EP2011/061450
(87) Numéro de publication internationale: WO 2012/010421

(56) Documents cités:
- WO-A1-99/43497
- US-A- 2 108 582
- US-A- 2 316 146
- US-A- 4 957 675

## Description

### DOMAINE DE L'INVENTION

La présente invention concerne un granulé thermoplastique à base de caséine et/ou de caséinate ainsi que son procédé de fabrication.

Ce granulé thermoplastique peut être utilisé notamment pour la fabrication d'objets biodégradables comme des sacs, des films, des pièces injectées, moulées thermoformées, calandrées, soufflées

### ETAT ANTERIEUR DE LA TECHNIQUE

Face à l'appauvrissement des réserves de pétrole, de nombreuses solutions ont été proposées afin de remplacer certains produits issus de matières fossiles. Plus particulièrement, de nombreuses alternatives ont été développées dans le domaine des compositions thermoplastiques.

Les substituts biodégradables des plastiques, BPS ("biodegradable plastic substitutes"), se décomposent en eau et dioxyde de carbone en présence de microorganismes. Ces substituts sont en général soit des polymères d'origine naturelle, soit des polymères d'origine naturelle modifiés chimiquement, soit des polymères synthétisés. Par exemple, il peut s'agir de poly-3-hydroxybutyrate, d'amidon modifié, d'acétate de cellulose, de polybutylène succinate (PBS), de polybutylène succinate adipate (PBSA), de polycaprolactone, d'acide polylactique. Par contre, ces substituts présentent souvent des propriétés mécaniques faibles. Par ailleurs, ils peuvent être parfois biofragmentables mais pas biodégradables.

L'utilisation de polymères issus de protéines végétales ou animales constitue un autre axe de recherche relatif au remplacement de produits issus des matières fossiles. Par exemple, des emballages hydrosolubles et comestibles ont été réalisés à base de protéines de soja. D'autre part, les protéines de maïs ont permis de fabriquer des matériaux pour des objets compostables alors que les protéines du petit lait ont été utilisées pour fabriquer des emballages pour des produits secs pré-pesés.

Ces films polymères d'origine protéinique sont le plus souvent fabriqués par voie solvant et parfois par un procédé sec. Dans la voie solvant, le polymère est mis en solution avec des additifs et un solvant qui s'évapore en formant un film plastique. Cette technique est relativement longue et coûteuse et s'avère donc peu adaptée à l'échelle industrielle. La voie sèche utilise les propriétés thermoplastiques conférées aux protéines après transformation thermomécanique et plastification.

La caséine représente 80 % des protéines du lait. Elle consiste en un mélange de caséine a, caséine β, caséine κ ayant des masses molaires comprises entre 19 000 et 25 000 g/mol.

Les films à base de caséine et de caséinate présentent des propriétés de transparence, de qualité nutritionnelle, de qualité sensorielle, de biodégradabilité ainsi que des propriétés barrière aux gaz tels que l'oxygène et le dioxyde de carbone.

Cependant, tout comme les autres films à base de protéines présents dans l'art antérieur, les films à base de caséine et de caséinate présentent de faibles propriétés mécaniques ainsi qu'une forte sensibilité à l'humidité. L'ajout de plastifiants tels que des polyols ou des sucres permet notamment d'améliorer leurs propriétés mécaniques.

Le document WO 99/43497 décrit un laminé biodégradable comprenant une ou plusieurs couches de polylactide ainsi qu'une ou plusieurs couches de protéines de lait. Les compositions décrites ne comprennent pas de polyester.

Le document US 2,108,582 décrit notamment l'extrusion d'une composition comprenant de la caséine, de la glycérine et de l'eau. Toutefois, ce document ne concerne pas la préparation de granules thermoplastiques.

Le document US 2,316,146 décrit une composition plastique contenant de la caséine, de l'eau ainsi que du glycéryl dilevulinate. Il ne s'agit pas de granulés thermoplastiques.

Le document US 4,957,675 décrit l'extrusion d'un mélange comprenant de la caséine, du carbonate de sodium, et de l'eau.

Bien que l'art antérieur comprenne des films à base de caséine et de caséinate, des granulés thermoplastiques essentiellement à base de caséine et/ou de caséinate n'ont pas été décrits.

En d'autres termes, le problème que se propose de résoudre l'invention est celui de préparer des compositions à base de protéines sous une autre forme qu'un film. Les Demandeurs ont mis au point un procédé grâce auquel les granulés obtenus permettent d'éviter les écueils de l'art antérieur liés notamment aux procédés de transformation de ces compositions. En effet, les compositions de l'art antérieur présentent des limites quant à leur transformation par des procédés industriels. Les applications pouvant découler de leur utilisation sont ainsi restreintes. La présente invention propose des compositions à base de protéines pouvant être aisément transformées par les procédés classiques de la plasturgie

### EXPOSE DE L'INVENTION

Pour se faire, les Demandeurs ont mis au point des granulés à base de caséine et/ou de caséinate. Ces granulés sont thermoplastiques, biodégradables, entièrement ou partiellement hydrosolubles et peuvent être comestibles dans certains cas.

Plus précisément, la présente invention concerne un granulé thermoplastique biodégradable comprenant :
- au moins un caséinate et/ou d'au moins une caséine ;
- au moins un agent plastifiant ; et
- au moins un polyester biodégradable.

Dans le cadre de l'invention, le terme « granulé » sous-entend également granulés.

Par caséinate, on entend principalement les sels de sodium, potassium, calcium ou magnésium de la caséine et leurs mélanges. Contrairement aux caséines qui sont hydrophobes, les caséinates sont hydrophiles et donc solubles dans l'eau.

La caséine est une protéine du lait peu soluble dans l'eau. Elle est avantageusement obtenue soit par une acidification (caséine acide), soit par une attaque enzymatique (caséine présure).

Dans le cadre de l'invention, les caséines et les caséinates sont des protéines animales issues du lait. On entend donc par matière protéinique du lait essentiellement les caséines, les caséinates et leurs mélanges.

Dans un premier mode de réalisation particulier, le granulé thermoplastique biodégradable selon l'invention contient :
- au moins un caséinate, dont le poids représente de 50 à 90 % par rapport au poids du granulé thermoplastique biodégradable, plus avantageusement de 65 à 75 % ;
- au moins un agent plastifiant, dont le poids représente de 5 à 40 % par rapport au poids du granulé thermoplastique biodégradable, plus avantageusement, de 10 à 40 % et encore plus avantageusement de 15 à 25 %.

Dans un deuxième mode de réalisation particulier, le granulé thermoplastique biodégradable selon l'invention contient :
- au moins une caséine, dont le poids représente de 50 à 90 % par rapport au poids du granulé thermoplastique biodégradable, plus avantageusement de 65 à 75 % ;
- au moins un agent plastifiant, dont le poids représente de 5 à 40 % par rapport au poids du granulé thermoplastique biodégradable, plus avantageusement, de 10 à 40 % et encore plus avantageusement de 15 à 25 %.

Dans un troisième mode de réalisation particulier, le granulé thermoplastique biodégradable selon l'invention contient :
- au moins un caséinate et au moins une caséine, le poids du mélange caséine/caséinate représentant de 40 à 90 % par rapport au poids du granulé thermoplastique biodégradable, plus avantageusement de 50 à 85 % et encore plus avantageusement de 60 à 70% ;
- au moins un agent plastifiant, dont le poids représente de 5 à 50 % par rapport au poids du granulé thermoplastique biodégradable, plus avantageusement, de 10 à 40 % et encore plus préférentiellement de 15 à 25 %.

La caséine permet d'améliorer les propriétés mécaniques, mais aussi de jouer sur le profil de solubilisation du produit transformé. Il est donc important de contrôler le rapport en poids entre caséine et caséinate dans le but de régler l'hydrosolubilité du matériau transformé et sa vitesse de biodégradation. Par matériau transformé ou produit fini, on entend tout objet susceptible d'être obtenu à partir du granulé selon l'invention, par les techniques classiques de plasturgie, et notamment par extrusion cast, extrusion-soufflage, extrusion-gonflage, calandrage ou injection. Il s'agit essentiellement de films, d'objets injectés ou thermoformés.

Dans le cas particulier où le granulé selon l'invention contient du caséinate et de la caséine, le rapport en poids entre la caséine et le caséinate est compris entre 5/95 et 95/5, de préférence entre 20/80 et 80/20 et de manière encore plus préférentielle, entre 40/60 et 60/40.

Les propriétés physico-chimiques du matériau transformé et donc sa transparence et son état de surface dépendent de la qualité du granulé préparé. Elles dépendent également de la teneur en plastifiant de la composition du granulé thermoplastique biodégradable. La formulation du granulé est donc liée à l'application visée.

De manière générale, l'agent plastifiant est une substance permettant d'abaisser la température de transition vitreuse du matériau.

Typiquement, l'agent plastifiant peut être choisi dans le groupe comprenant l'eau, le glycérol, le sorbitol, le mannitol, le maltitol, l'éthylène glycol et leurs mélanges. Préférentiellement, l'agent plastifiant est de l'eau et/ou du glycérol.

Il est à noter que certains de ces agents plastifiants comprennent de l'eau résiduelle.

De manière avantageuse, le poids de l'agent plastifiant représente entre 5 et 40 % par rapport au poids du granulé thermoplastique biodégradable, plus avantageusement, entre 10 et 40 % et encore plus préférentiellement entre 15 et 25 %.

L'homme du métier saura adapter la préparation du granulé afin d'améliorer les propriétés mécaniques du produit fini. Ainsi, l'incorporation d'au moins un polymère additionnel peut être envisagée. Dans un mode de réalisation particulier, le polyester biodégradable, est avantageusement du PBAT (poly(butylène adipate-co-butylène téréphtalate)). Le poids du polyester biodégradable représente de 2,5 à 35% par rapport au poids du granulé thermoplastique biodégradable, avantageusement de 5 à 20 % et encore plus avantageusement de 15 à 20%.

De manière générale, plus la teneur en polyester biodégradable augmente, plus l'hydrosolubilité des granulés thermoplastiques biodégradables selon l'invention diminue.

Selon un mode de réalisation bien particulier, le granulé thermoplastique biodégradable selon l'invention peut contenir en outre au moins un additif choisi dans le groupe comprenant :
- les colorants ;
- les coagulants de protéines ;
- les polymères biodégradables choisis dans le groupe comprenant les composés suivants : poly-3-hydroxybutyrate, acétate de cellulose, polybutylène succinate (PBS), polybutylène succinate adipate (PBSA), polycaprolactone, acide polylactique, et leurs mélanges.

L'additif est choisi de manière à ne pas modifier le caractère biodégradable du granulé selon l'invention.

Le poids de l'additif peut avantageusement représenter de 15 à 50 % par rapport au poids du granulé thermoplastique biodégradable.

Selon un mode de réalisation préféré, le granulé selon la présente invention est constitué de :
- au moins un caséinate et/ou d'au moins une caséine ;
- au moins un agent plastifiant ;
- au moins un polyester biodégradable ; et
- éventuellement au moins un additif.

La présente invention concerne aussi un procédé de fabrication d'un granulé thermoplastique biodégradable dans lequel :
- on incorpore, dans une extrudeuse, à température ambiante, au moins un caséinate et/ou au moins une caséine, au moins un agent plastifiant, et au moins un polyester biodégradable et/ou au moins un additif ;
- on augmente la température jusqu'à 130 °C ;
- on mélange et on malaxe les différents constituants ;
- on refroidit les joncs obtenus en sortie de filière ;
- on granule les joncs refroidis dans un granulateur.

Les polyesters biodégradables et les additifs mentionnés sont ceux cités précédemment.

La température ambiante est typiquement aux alentours de 20 °C.

La première étape concernant la préparation du granulé thermoplastique biodégradable selon l'invention consiste à mélanger, dans une extrudeuse, des poudres (caséinate et/ou caséine), et au moins un agent plastifiant pour former une pâte après des étapes de mélangeage et cisaillement. Un polyester biodégradable et/ou au moins un additif est incorporé. Un doseur permet de réguler la masse des poudres introduites dans la composition qui est soumise à des étapes de mélangeage, cisaillement et cuisson dans l'extrudeuse.

En sortie de filière, le jonc obtenu est refroidi puis granulé. De manière générale, il est immergé dans un bac de refroidissement puis découpé dans un granulateur à fraise rotative. Les granulés cylindriques ainsi obtenus ont typiquement un diamètre et une longueur de 2 à 3 mm.

Dans un mode de réalisation particulier, l'installation comprenant l'extrudeuse, les pompes, le bac de refroidissement et le granulateur est continue et ne comporte pas d'éléments séparés.

Typiquement, l'extrudeuse utilisée est de type bi-vis co-rotative. Elle est composée de différents éléments modulaires comportant des éléments à pas directs, des éléments malaxeurs et des éléments à pas indirects. Le profil de température de l'extrudeuse est adapté selon la composition de départ et comprend des zones de mélangeage, de cisaillement, de transport et de cuisson.

La température est contrôlée tout au long de l'extrudeuse par des régulateurs indépendants, avec de préférence un régulateur par zone. De manière avantageuse, l'extrudeuse comprend 10 zones.

Le profil de température des différentes zones de l'extrudeuse est propre à la composition des granulés préparés. Par exemple, et de manière avantageuse, la température dans la zone de mélangeage est comprise entre environ 20 °C et 100 °C alors que, dans la zone de première cuisson, la température est comprise entre 70 et 130 °C. Dans la zone de cuisson terminale, la température peut être comprise entre 70 et 120 °C.

Durant le procédé de fabrication du granulé thermoplastique biodégradable selon l'invention, de l'éthanol peut éventuellement être ajouté.

Comme déjà indiqué, le granulé thermoplastique biodégradable selon l'invention ainsi obtenu peut être utilisé pour la fabrication d'objets par les méthodes classiques de plasturgie: extrusion cast, extrusion-soufflage, extrusion-gonflage, calandrage, injection, thermoformage ou filage.

La présente invention concerne aussi tout objet susceptible d'être obtenu, après transformation du granulé décrit ci-dessus, par les techniques d'extrusion cast, extrusion-soufflage, extrusion-gonflage, calandrage, injection, thermoformage ou filage.

Il est à noter que le granulé et les objets selon la présente invention peuvent être comestibles, notamment lorsque l'agent plastifiant est de l'eau et/ou du glycérol.

L'invention et les avantages qui en découlent ressortiront mieux des figures et exemples suivants.

### DESCRIPTION DES FIGURES

La figure 1 représente le Module d'Young en fonction de l'humidité relative pour des granulés comprenant du caséinate de sodium avec différents taux de plastifiant :
   - triangles : 83 % en poids de caséinate de sodium, 17 % en poids de glycérol;
   - carrés : 79 % en poids de caséinate de sodium, 21 % en poids de glycérol ;
   - losanges : 75 % en poids de caséinate de sodium, 25 % en poids de glycérol.
La figure 2 représente la déformation à la rupture en fonction de l'humidité relative pour des granulés comprenant du caséinate de sodium avec différents taux de plastifiant :
   - triangles : 83 % en poids de caséinate de sodium, 17 % en poids de glycérol;
   - carrés : 79 % en poids de caséinate de sodium, 21 % en poids de glycérol ;
   - losanges : 75 % en poids de caséinate de sodium, 25 % en poids de glycérol.
La figure 3 illustre le Module d'Young en fonction de la quantité de polyester (PBAT, poly(butylène adipate-co-butylène téréphtalate)) ajoutée à une composition comprenant, avant addition du PBAT, 79 % en poids de caséinate de sodium et 21 % en poids de glycérol. Ces résultats sont obtenus dans des conditions d'humidité de 50%.

### EXEMPLES DE REALISATION DE L'INVENTION

L'extrudeuse utilisée pour réaliser les exemples suivants est une extrudeuse bi-vis co-rotative BC 21 de marque Clextral, de diamètre 25 mm, d'entraxe 21 mm et de longueur 900 mm.

La première zone de l'extrudeuse est une zone d'introduction de la ou des poudres : caséine présure, caséine acide, caséinate de sodium, caséinate de calcium, caséinate de potassium. Les liquides (plastifiant et éventuellement éthanol) sont introduits dans la deuxième zone. L'extrudeuse comporte en outre une zone de dégazage à l'air libre et une dernière zone consistant en une filière jonc cylindrique de diamètre 4 mm.

Le profil de vis est le suivant :
- 750 mm de vis à pas direct
- 50 mm de vis de mélangeage
- 100 mm de vis à pas inverse

Il est à noter que les échantillons mesurés contiennent une quantité non négligeable d'eau en fonction de l'humidité relative.

A la sortie de l'extrudeuse, le jonc est immergé dans un bac de refroidissement, séché et introduit dans un granulateur pour donner des granulés de 2 à 3 mm de diamètre.

**Tableau 1 : Granulés thermoplastiques biodégradables selon l'invention**

| N° Echantillon | Caséinate | Caséine | Eau | Glycérol | Ethanol |
|---|---|---|---|---|---|
| 1 | 27% (iii) | 18% (i) | 21,00% | 13,00% | 21,00% |
| 2 | 52% (iii) | 6% (ii) | 21,00% | 21,00% | |
| 3 | 5,5% (iii) | 50% (ii) | 24,50% | 20,00% | |
| 4 | 52% (iii) | | 22,00% | 26,00% | |
| 5 | 67% (iii) | | 10,00% | 13,00% | 10,00% |
| 6 | 59% (iv) | | 22,00% | 19,00% | |
| 7 | 59% (v) | | 22,00% | 19,00% | |
| 8 | | 59% (i) | 22,00% | 19,00% | |
| 9 | | 64,5% (i) | 23,00% | | 12,50% |
| 10 | | 68% (ii) | 14,00% | 4,00% | 14,00% |

| | | | | | |
|---|---|---|---|---|---|
| (i) caséine présure (ii) caséine acide (iii) caséinate de sodium (iv) caséinate de calcium (v) caséinate de potassium | | | | | |

La teneur en composants est exprimée en pourcentage massique par rapport au poids du granulé thermoplastique biodégradable.

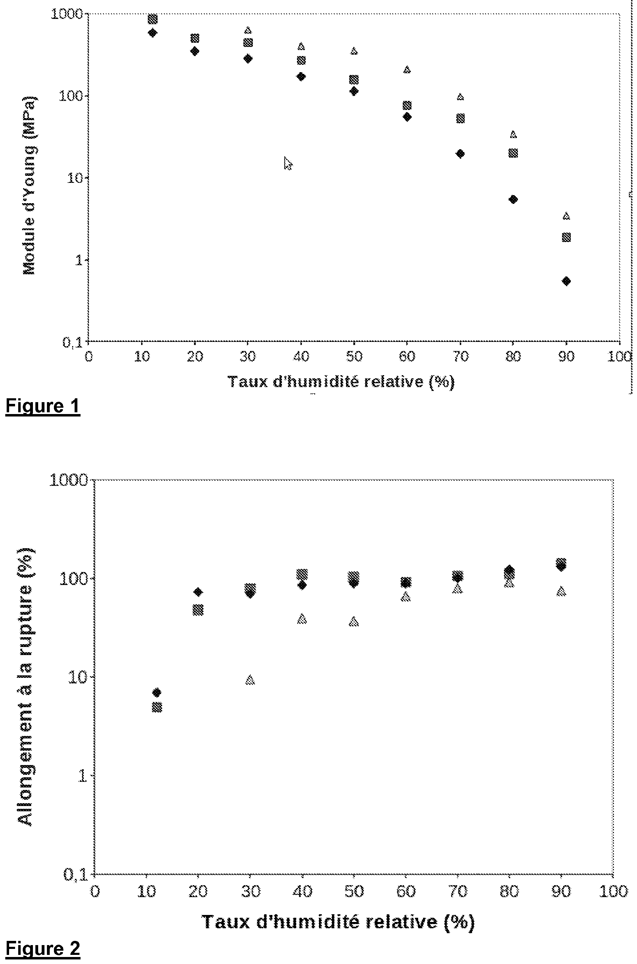

### Commentaire des figures 1 à 3 :

Figure 1 : Comme le montre la figure 1, lorsque le taux d'humidité est faible (inférieur à 40% d'humidité relative), les films plastifiés de caséinate présentent des valeurs de module d'Young élevées, supérieures à celles obtenues pour le polyéthylène (entre 200 et 400 Mpa). Au-delà de 40 % d'humidité relative, le module d'Young chute proportionnellement au taux d'humidité. On note aussi que plus la quantité de plastifiant est importante, moins le module d'Young est élevé.

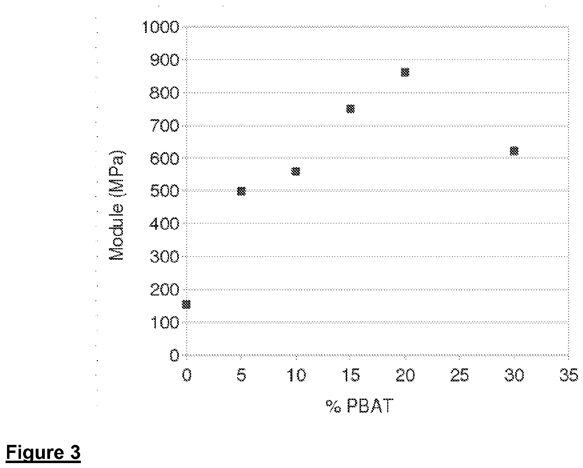

Figure 2 : La figure 2 montre que l'allongement à la rupture dépend fortement de l'humidité relative, surtout lorsque le taux d'humidité relative est faible. La figure 3 illustre également le rôle du plastifiant par rapport à l'allongement à la rupture. Plus le film est plastifié, plus l'allongement à la rupture augmente.

Figure 3 : Lorsqu'au moins 5% de PBAT sont ajoutés, les modules élastiques sont supérieurs à ceux obtenus pour des compositions à base de caséinate et de plastifiant.

On remarque sur cette figure que lorsqu'au moins 5% de PBAT sont ajoutés, les modules élastiques sont supérieurs à ceux obtenus pour des compositions à base de caséinate et de plastifiant. Il semble y avoir un maximum pour des quantités supérieures à 30%.

## Revendications

1. Granulé thermoplastique biodégradable comprenant au moins un caséinate et/ou au moins une caséine, au moins un agent plastifiant, et au moins un polyester biodégradable.

2. Granulé thermoplastique biodégradable selon la revendication 1 ***caractérisé* en ce qu'**il contient :
- au moins un caséinate, dont le poids représente de 50 à 90 % par rapport au poids du granulé thermoplastique biodégradable, plus avantageusement de 65 à 75 %;
- au moins un agent plastifiant, dont le poids représente de 5 à 40 % par rapport au poids du granulé thermoplastique biodégradable, plus avantageusement, de 10 à 40 % et encore plus préférentiellement de 15 à 25 %.

3. Granulé thermoplastique biodégradable selon la revendication 1 ***caractérisé* en ce qu'**il contient :
- au moins une caséine, dont le poids représente de 50 à 90 % par rapport au poids du granulé thermoplastique biodégradable, plus avantageusement de 65 à 75 % ;
- au moins un agent plastifiant, dont le poids représente de 5 à 40 % par rapport au poids du granulé thermoplastique biodégradable, plus avantageusement, de 10 à 40 % et encore plus préférentiellement de 15 à 25 %.

4. Granulé thermoplastique biodégradable selon la revendication 1 ***caractérisé* en ce qu'**il contient :
- au moins un caséinate et au moins une caséine, le poids du mélange caséine/caséinate représentant de 40 à 90 % par rapport au poids du granulé thermoplastique biodégradable, plus avantageusement de 50 à 85 % et encore plus avantageusement de 60 à 70 % ;
- au moins un agent plastifiant, dont le poids représente de 5 à 50 % par rapport au poids du granulé thermoplastique biodégradable, plus avantageusement, de 10 à 40 % et encore plus préférentiellement de 15 à 25 %.

5. Granulé thermoplastique biodégradable selon l'une des revendications précédentes ***caractérisé* en ce que** l'agent plastifiant est choisi dans le groupe comprenant l'eau, le glycérol, le sorbitol, le mannitol, le maltitol, l'éthylène glycol et leurs mélanges.

6. Granulé thermoplastique biodégradable selon l'une des revendications précédentes ***caractérisé* en ce que** le polyester biodégradable est du poly(butylène adipate-co-butylène téréphtalate) (PBAT).

7. Granulé thermoplastique biodégradable selon la revendication 6 ***caractérisé* en ce que** le poids du polyester biodégradable représente de 2,5 à 35 % par rapport au poids du granulé thermoplastique biodégradable, avantageusement de 5 à 20 % et encore plus avantageusement de 15 à 20 %.

8. Granulé thermoplastique biodégradable selon l'une des revendications 1 à 7 ***caractérisé* en ce que** le granulé thermoplastique biodégradable contient en outre au moins un additif choisi dans le groupe comprenant :
- les colorants ;
- les coagulants de protéines ;
- les polymères biodégradables choisis dans le groupe comprenant les composés suivants : poly-3-hydroxybutyrate, acétate de cellulose, polybutylène succinate (PBS), polybutylène succinate adipate (PBSA), polycaprolactone, acide polylactique, et leurs mélanges.

9. Procédé de fabrication de granulé thermoplastique biodégradable selon l'une des revendications 1 à 8 dans lequel :
- on incorpore, dans une extrudeuse, à température ambiante, au moins un caséinate et/ou au moins une caséine, au moins un agent plastifiant, et au moins un polyester biodégradable et/ou au moins un additif ;
- on augmente la température jusqu'à 130 °C ;
- on mélange et on malaxe les différents constituants ;
- on refroidit les joncs obtenus en sortie de filière ;
- on granule les joncs refroidis dans un granulateur.

10. Utilisation du granulé thermoplastique biodégradable selon l'une des revendications 1 à 8 pour la fabrication d'objets par extrusion cast, extrusion-soufflage, extrusion-gonflage, calandrage, injection, thermoformage ou filage.

11. Objet susceptible d'être obtenu, après transformation par extrusion cast, extrusion-soufflage, extrusion-gonflage, calandrage, injection, thermoformage ou filage, du granulé selon l'une des revendications 1 à 8.

## Patentansprüche

1. Thermoplastisches bioabbaubares Granulat, umfassend wenigstens ein Kaseinat und/oder wenigstens ein Kasein, wenigstens ein Plastifizierungsmittel und wenigstens einen bioabbaubaren Polyester.

2. Thermoplastisches bioabbaubares Granulat nach Anspruch 1, **dadurch gekennzeichnet, dass** es enthält:
- wenigstens ein Kaseinat, dessen Gewicht von 50 bis 90 % bezogen auf das Gewicht des thermoplastischen bioabbaubaren Granulats darstellt, stärker bevorzugt von 65 bis 75 %,
- wenigstens ein Plastifizierungsmittel, dessen Gewicht von 5 bis 40 % bezogen auf das Gewicht des thermoplastischen bioabbaubaren Granulats darstellt, stärker bevorzugt von 10 bis 40 % und noch stärker bevorzugt von 15 bis 25 %.

3. Thermoplastisches bioabbaubares Granulat nach Anspruch 1, **dadurch gekennzeichnet, dass** es enthält:
- wenigstens ein Kasein, dessen Gewicht von 50 bis 90 % bezogen auf das Gewicht des thermoplastischen bioabbaubaren Granulats darstellt, stärker bevorzugt von 65 bis 75 %,
- wenigstens ein Plastifizierungsmittel, dessen Gewicht von 5 bis 40 % bezogen auf das Gewicht des thermoplastischen bioabbaubaren Granulats darstellt, stärker bevorzugt von 10 bis 40 % und noch stärker bevorzugt von 15 bis 25 %.

4. Thermoplastisches bioabbaubares Granulat nach Anspruch 1, **dadurch gekennzeichnet, dass** es enthält:
- wenigstens ein Kaseinat und wenigstens ein Kasein, wobei das Gewicht der Kasein/Kaseinatmischung von 40 bis 90 % bezogen auf das Gewicht des thermoplastischen bioabbaubaren Granulats darstellt, stärker bevorzugt von 50 bis 85 %, noch stärker bevorzugt vom 60 bis 70%,
- wenigstens ein Plastifizierungsmittel, dessen Gewicht von 5 bis 50 % bezogen auf das Gewicht des thermoplastischen bioabbaubaren Granulats darstellt, stärker bevorzugt von 10 bis 40 % und noch stärker bevorzugt von 15 bis 25 %.

5. Thermoplastisches bioabbaubares Granulat nach einem der vorhergehenden Ansprüche, **dadurch gekennzeichnet, dass** das Plastifizierungsmittel ausgewählt ist aus der Gruppe umfassend Wasser, Glycerin, Sorbitol, Mannitol, Maltitol, Ethylenglycol und ihre Mischungen.

6. Thermoplastisches bioabbaubares Granulat nach einem der vorhergehenden Ansprüche, **dadurch gekennzeichnet, dass** der bioabbaubare Polyester Poly(butylenadipatcobutylenterephthalat) (PBAT) ist.

7. Thermoplastisches bioabbaubares Granulat nach Anspruch 6, **dadurch gekennzeichnet, dass** das Gewicht des bioabbaubaren Polyesters 2,5 bis 35 % bezogen auf das Gewicht des thermoplastischen bioabbaubaren Granulats darstellt, bevorzugt von 5 bis 20 % und stärker bevorzugt von 15 bis 20 %.

8. Thermoplastisches bioabbaubares Granulat nach einem der Ansprüche 1 bis 7, **dadurch gekennzeichnet, dass** das thermoplastische bioabbaubare Granulat außerdem wenigstens ein Additiv enthält, ausgewählt aus der Gruppe umfassend:
- Farbstoffe,
- Proteinkoagulantien,
- bioabbaubare Polymere ausgewählt aus der Gruppe umfassend die folgenden Verbindungen: Poly-3-hydroxybutyrat, Celluloseacetat, Polybutylensuccinat (PBS), Polybutylensuccinatadipat (PBSA), Polycaprolacton, Polymilchsäure und ihre Mischungen.

9. Verfahren zur Herstellung eines thermoplastischen bioabbaubaren Granulats nach einem der Ansprüche 1 bis 8, in welchem:
- man in einen Extruder bei Umgebungstemperatur wenigstens ein Kaseinat und/oder wenigstens ein Kasein, wenigstens ein Plastifizierungsmittel, wenigstens einen bioabbaubaren Polyester und/oder wenigstens ein Additiv einbringt,
- man die Temperatur bis auf 130 °C erhöht,
- man die verschiedenen Bestandteile mischt und knetet,
- man die Stäbe abkühlt, welche am Ausgang der Düse erhalten werden,
- man die abgekühlten Stäbe in einem Granulator granuliert.

10. Verwendung von einem thermoplastischen bioabbaubaren Granulat nach einem der Ansprüche 1 bis 8 zur Herstellung von Objekten durch Gußextrusion, Extrusion-Blasen, Extrusion-Aufblasen, Kalandern, Injektion, Thermoformung oder Strangpressen.

11. Objekt, erhältlich nach Verarbeitung durch Gußextrusion, Extrusion-Blasen, Extrusion-Aufblasen, Kalandern, Injektion, Thermoformung oder Strangpressen, eines Granulats nach einem der Ansprüche 1 bis 8.

## Claims

1. Biodegradable thermoplastic pellet comprising at least one caseinate and/or at least one casein, at least one plasticizer, and at least one biodegradable polyester.

2. Biodegradable thermoplastic pellet according to claim 1, ***characterized* in that** it contains:
- at least one caseinate, the weight of which represents from 50 to 90% with respect to the weight of the biodegradable thermoplastic pellet, more advantageously from 65 to 75%;
- at least one plasticizer, the weight of which represents from 5 to 40% with respect to the weight of the biodegradable thermoplastic pellet, more advantageously, from 10 to 40%, and even more preferentially from 15 to 25%.

3. Biodegradable thermoplastic pellet according to claim 1, ***characterized* in that** it contains:
- at least one casein, the weight of which represents from 50 to 90% with respect to the weight of the biodegradable thermoplastic pellet, more advantageously from 65 to 75%;
- at least one plasticizer, the weight of which represents from 5 to 40% with respect to the weight of the biodegradable thermoplastic pellet, more advantageously, from 10 to 40%, and even more preferentially from 15 to 25%.

4. Biodegradable thermoplastic pellet according to claim 1, ***characterized* in that** it contains:
- at least one caseinate and at least one casein, the weight of the casein/caseinate mixture representing from 40 to 90% with respect to the weight of the biodegradable thermoplastic pellet, more advantageously from 50 to 85%, and even more advantageously from 60 to 70%;
- at least one plasticizer, the weight of which represents from 5 to 50% with respect to the weight of the biodegradable thermoplastic pellet, more advantageously, from 10 to 40%, and even more preferentially from 15 to 25%.

5. Biodegradable thermoplastic pellet according to one of the preceding claims, ***characterized* in that** the plasticizer is selected from the group comprising water, glycerol, sorbitol, mannitol, maltitol, ethylene glycol and their mixtures.

6. Biodegradable thermoplastic pellet according to one of the preceding claims, ***characterized* in that** the biodegradable polyester is poly(butylene adipate-co-butylene terephthalate) (PBAT).

7. Biodegradable thermoplastic pellet according to claim 6, ***characterized* in that** the weight of the biodegradable polyester represents from 2.5 to 35% with respect to the weight of the biodegradable thermoplastic pellet, advantageously from 5 to 20%, and even more advantageously from 15 to 20%.

8. Biodegradable thermoplastic pellet according to one of claims 1 to 7, ***characterized* in that** the biodegradable thermoplastic pellet contains moreover at least one additive selected from the group comprising:
- colorants;
- protein coagulants;
- biodegradable polymers selected from the group comprising the following compounds: poly-3-hydroxybutyrate, cellulose acetate, polybutylene succinate (PBS), polybutylene succinate adipate (PBSA), polycaprolactone, polylactic acid, and their mixtures.

9. Process for the production of a biodegradable thermoplastic pellet according to one of claims 1 to 8, in which:
- in an extruding machine, at ambient temperature, at least one caseinate and/or at least one casein, at least one plasticizer, and at least one biodegradable polyester and/or at least one additive are incorporated;
- the temperature is increased to 130°C;
- the different constituents are mixed and plasticized;
- the extruded strings obtained at the output of the die are cooled;
- the cooled extruded strings are pelletized in a pelletizer.

10. Use of the biodegradable thermoplastic pellet according to one of claims 1 to 8, for the production of objects by cast extrusion, extrusion blow moulding, blow film process, calendering, injection, thermoforming or spinning.

11. Object capable of being obtained, after transformation by cast extrusion, extrusion blow moulding, blow film process, calendering, injection, thermoforming or spinning, of the pellet according to one of claims 1 to 8.
